# EUROPÄISCHE PATENTSCHRIFT

(11) **EP 1 023 543 B1**
(45) Veröffentlichungstag und Bekanntmachung des Hinweises auf die Patenterteilung: **08.05.2002**
(21) Anmeldenummer: 98955454.8
(22) Anmeldetag: 14.10.1998
(51) Int. Cl.: F16D 65/16

(54) **KOLBEN FÜR EINE HYDRAULISCHE KOLBEN-ZYLINDER-EINHEIT**
PISTON FOR A HYDRAULIC PISTON CYLINDER UNIT
PISTON POUR ENSEMBLE PISTON-CYLINDRE HYDRAULIQUE

(30) Priorität: 17.10.1997 DE 19746060
(43) Veröffentlichungstag der Anmeldung: 02.08.2000
(73) Patentinhaber: Continental Teves AG & Co. oHG, 60488 Frankfurt am Main (DE)
(72) Erfinder: LEIDECKER, Hans-Dieter, D-65760 Eschborn (DE); REUTER, Manfred, D-35789 Weilmünster (DE); LANGER, Norman, D-65835 Liederbach (DE); MUSOLF, Jürgen, D-60323 Frankfurt am Main (DE); KIRSCHNER, Thomas, D-60596 Frankfurt am Main (DE); BARTSCH, Volker, D-38518 Gifhorn (DE); CAROTA, Holger, D-65824 Schwalbach (DE); WALTER, Klaus-Peter, D-31234 Edemissen (DE); GERHARDT, Winfried, D-60489 Frankfurt am Main (DE)
(86) Internationale Anmeldenummer: EP9806525
(87) Internationale Veröffentlichungsnummer: WO9937938

(56) Entgegenhaltungen:
- EP-A- 0 578 569
- DE-A- 3 833 552
- US-A- 3 409 106
- US-A- 4 170 926
- US-A- 5 003 681
- ALFRED TEVES: "Bremsen-Handbuch" 1993 , AUTOHAUS VERLAG , OTTOBRUNN XP002100901 20271 siehe Seite 157 - Seite 159 siehe Seite 336; Abbildung 46

## Beschreibung

Die vorliegende Erfindung betrifft einen Kolben für eine hydraulische Kolben-Zylinder-Einheit, insbesondere einen Bremskolben für eine Scheibenbremse gemäß dem Oberbegriff des Patentanspruches 1, wie er z.B. in EP-A-0 578 569 offenbart ist.

Derartige gattungsgemäße Kolben sind im Falle von Bremskolben bei Scheibenbremsen unter anderem mitverantwortlich für die Entstehung bzw. Übertragung von unerwünschten Bremsgeräuschen. Zur Reduzierung solcher Bremsgeräusche sind die Bremskolben in der Regel zweckdienlich gestaltet. Aus der DE 38 33 552 A1 geht beispielsweise eine Teilbelag-Scheibenbremse hervor, die über einen gattungsgemäßen topfförmigen Bremskolben verfügt. Dabei liegt der topfförmige Bremskolben mit einer Stirnseite an der Rückseite eines Bremsbelages an, während der Topfboden dem hydraulischen Druckraum im Bremsgehäuse zugewandt ist. An seiner dem Reibbelag zugewandten Stirnfläche besitzt der Bremskolben einen Absatz, wodurch sich keine ringförmige, sondern vielmehr eine sichelförmige Anlagefläche zwischen Bremskolben und Reibbelagrückenplatte ergibt. Eine solche sichelfömige Anlage zwischen Bremskolben und Bremsbelag bewirkt eine geringfügige Verlagerung des resultierenden Druckpunktes zwischen Bremskolben und Bremsbelag, was in einer positiven Reduzierung der Bremsgeräusche resultiert. Als Folge einer derartigen Modifikation des Bremskolbens zur Geräuschreduzierung ergibt sich die Forderung nach einer maßgenauen Orientierung bzw. Positionierung des Bremskolbens innerhalb des Bremszylinders, nicht zuletzt um auch eine unerwünschte Schrägstellung des kolbenseitigen Bremsbelages zu vermeiden. Eine solche Positionierung bezieht sich insbesondere auf die genaue Winkelposition des Kolbens bezüglich einer Drehung um die Zylinderbohrungsachse. Bei bekannten Ausführungen von Bremskolben ist eine eindeutige räumliche Positionierung des Bremskolbens innerhalb des Bremszylinders nur unzureichend möglich.

Davon ausgehend besteht die Aufgabe der Erfindung darin, einen Kolben für eine hydraulische Kolben-Zylinder-Einheit anzugeben, der unter Einhaltung einer eindeutigen räumlichen Positionierung innerhalb einer Zylinderbohrung einfach zu montieren ist.

Gelöst wird die Aufgabe durch die Merkmalskombinationen der Patentansprüche 1 und 3. Dabei besitzt der Kolben eine schlüsselartige Aufnahme, die zum Eingriff eines entsprechend gestalteten Montagemittels geeignet ist und zur eindeutigen räumlichen Positionierung des Kolben innerhalb einer Zylinderbohrung dient. Während der Montage des Kolbens innerhalb einer Zylinderbohrung kann der Kolben somit maßgenau in der Zylinderbohrung angeordnet werden. Insbesondere wird die genaue Einhaltung der Winkelposition bezogen auf eine Drehung um die Zylinderbohrungsachse gewährleistet.

Gemäß einer vorteilhaften Ausführungsvariante greifen das Montagemittel, das insbesondere als passendes Montagewerkzeug ausgeführt ist, und die entsprechend gestaltete Aufnahme im Kolben während der Kolbenmontage analog zu einer männlich-weiblich-Steckeranordnung formschlüssig ineinander. Dadurch kann das Montagemittel bzw. -werkzeug lediglich in einer einzigen Stellung an der Aufnahme im Kolben angesetzt werden und erlaubt damit eine eindeutige Ausrichtung des Kolbens innerhalb der Zylinderbohrung.

Erfindungsgemäß ist die genannte Aufnahme an einer der Stirnseiten des zylindrischen Kolbens ausgebildet bzw. bei einer im wesentlichen topfförmigen Gestaltung des Kolbens, wie dies insbesondere bei Bremskolben der Fall ist, an der Innenseite des Bremskolbentopfes.

Die schlüsselartige Aufnahme ergibt sich durch Ausbildung einer entsprechenden Ausnehmung bzw. Erhebung am Kolben. Eine derartige Ausnehmung bzw. Erhebung gestattet wie bereits erwähnt, den schlüsselartigen, eindeutigen Eingriff bzw. das Ansetzen eines zugehörigen Montagemittels und besitzt, wie insbesondere den Zeichnungen zu entnehmen ist, eine dementsprechend gestaltete Kontur.

Gemäß der Erfindung ist zumindest eine der Stirnflächen des zylindrischen Kolbens, bezogen auf eine senkrecht zur Kolbenverschieberichtung sich erstreckende Ebene zumindest abschnittsweise schräg ausgerichtet. Im Falle eines Bremskolbens ergibt sich daraus im normalen Bremsenbetrieb eine für die Verhinderung von Bremsgeräuschen günstige Schrägstellung des Kolbens innerhalb der Zylinderbohrung. Vorteilhaft verläuft durch die abgeschrägte Fläche ein in Sekantenrichtung des Kolbens verlaufender Absatz. Dieser Absatz ist in seiner Tiefe in Kolbenverschieberichtung derart bemessen, daß er unter Ausnutzung optischer Mittel (z. B. Laser, Bilderkennung, Video etc.) zur Lageerkennung des Kolbens zur genauen Positionierung des Kolbens während der Montage verwendet werden kann. In Kombination mit der beschriebenen Positionierungseinrichtung für den Bremskolben läßt sich dadurch ein gezielter Einfluß auf die Bremsgeräuschentstehung nehmen.

Verschiedene Ausführungsbeispiele der Erfindung werden anhand der Zeichnung dargestellt und im folgenden näher erläutert.

Es zeigen:
- Fig. 1-3: jeweils zwei teilweise geschnittene Ansichten eines topfförmigen Bremskolbens mit einer schlüsselartigen Aufnahme im Kolbeninneren,
- Fig. 4-5: jeweils eine Draufsicht auf einen topfförmigen Bremskolben mit einer weiteren Ausgestaltungsvariante der Aufnahme im Kolbeninneren,
- Fig. 6: zwei Ansichten eines topfförmigen Bremskolbens mit einem abgeschrägten Stirnflächenabschnitt sowie einem Absatz an der Stirnfläche.

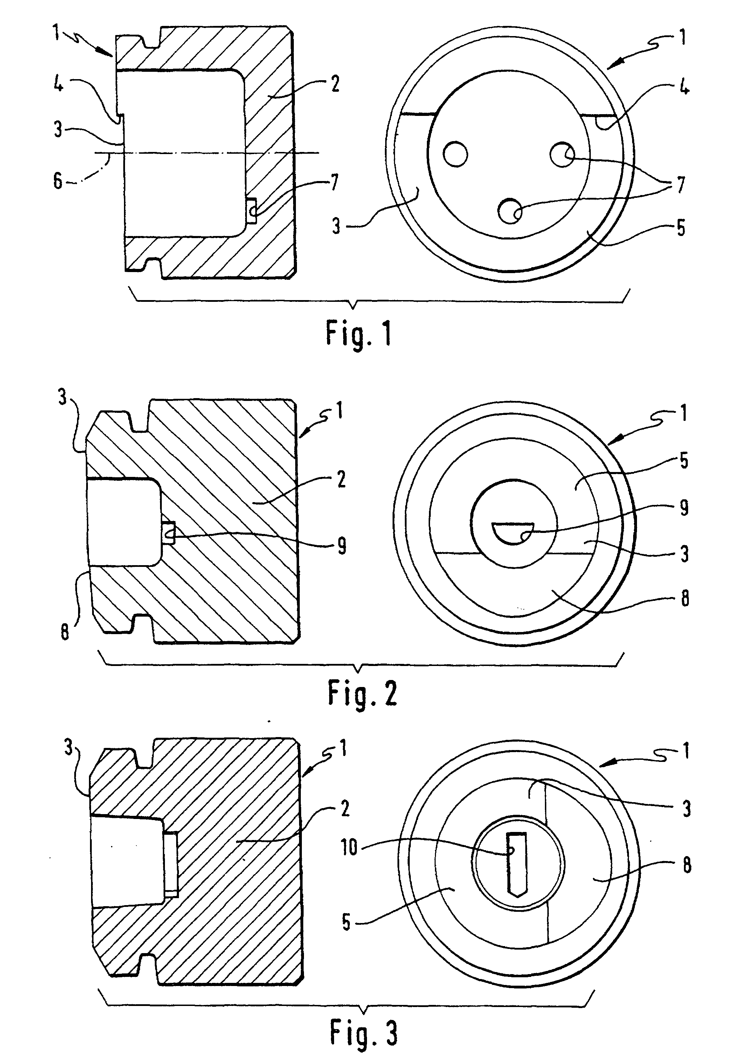

Die in den Fig. 1 bis 6 dargestellten Varianten von Bremskolben 1 sind sämtlich zum Einsatz in einer nicht gezeigten Scheibenbremse insbesondere für Kraftfahrzeuge geeignet. Dabei ist ein jeder dieser Bremskolben 1 innerhalb einer Zylinderbohrung des Bremsgehäuses axial verschiebbar gelagert. Jeder der zylindrischen Bremskolben 1 besitzt an seinem dem hydraulischen Druckraum innerhalb des Bremsgehäuses zugewandten Ende einen Topfboden 2 sowie auf der gegenüberliegenden Seite des Bremskolbens eine im wesentlichen ringförmige Stirnfläche 3 zur Anlage des Bremskolbens 1 an einer nicht gezeigten Rückenplatte eines Bremsbelages. Im einzelnen hat der Bremskolben 1 unter anderem einen Einfluß auf das Geräuschverhalten einer zugehörigen Kraftfahrzeugbremse und ist zu diesem Zwecke häufig mit geräuschreduzierenden Gestaltungsmerkmalen ausgestattet. Dazu zählen insbesondere Maßnahmen an der Stirnfläche 3, die eine Auswirkung auf die Kontaktfläche zwischen dem nicht gezeigten Bremsbelag und dem Bremskolben 1 haben. So wird in Figur 1 beispielsweise die Ausbildung eines Absatzes 4 an der Stirnfläche 3 verdeutlicht, die zu einer sichelförmigen Anlage 5 des Bremskolbens 1 am Bremsbelag führt. Darüber hinaus bewirkt der Absatz 4 an der Stirnfläche 3 eine für die Geräuschreduzierung günstige Schrägstellung des Bremskolbens 1 innerhalb der zylinderbohrung. Die zielgerichtete Auslegung der Schiefstellung des Bremskolbens 1 sowie der sichelförmigen Anlage 5 ist hierbei entscheidend von einer maßgenauen Positionierung des Bremskolbens 1 innerhalb der nicht gezeigten Zylinderbohrung abhängig. Insbesondere ist entscheidend, in welcher Winkelposition bezogen auf eine Drehung um die Zylinderbohrungsachse 6 der Bremskolben 1 innerhalb der Zylinderbohrung während der Montage positioniert wird. Auf Grundlage einer nicht auftretenden Verdrehung des Bremskolbens in der Zylinderbohrung während des Bremsenbetriebes wird also bereits während der positionsgenauen Montage des Bremskolbens 1 ein entscheidender Einfluß auf die Wirksamkeit der Geräuschreduzierungsmaßnahmen am Bremskolben 1 ausgeübt. Die Wirksamkeit der sichelförmigen Anlage 5 bzw. der Kolbenschrägstellung wird demzufolge während der positionsgenauen Bremskolbenmontage festgelegt.

Dazu ist am Bremskolben 1 eine schlüsselartige Aufnahme vorgesehen, in die ein entsprechend gestaltetes Montagemittel, insbesondere ein zugehöriges Montagewerkzeug, zur Positionierung des Bremskolbens 1 innerhalb der Zylinderbohrung eingreifen kann. Bei ausreichender Dimensionierung des Absatzes 4 an der Stirnfläche 3 kann ein solches Montagewerkzeug besonders einfach an eben diesem Absatz 4 angreifen und den Bremskolben 1 während der Montage in einer genau bestimmten Winkelposition innerhalb der Zylinderbohrung anordnen. Bei besonders flacher Gestaltung des Absatzes 4 ist die Angriffsfläche für ein Werkzeug unzureichend und die Anordnung einer zusätzlichen Aufnahme für ein Montagemittel wird erforderlich.

Neben den in den Figuren dargestellten Ausführungsvarianten ist es besonders vorteilhaft möglich eine einfache nutartige Vertiefung in die ringförmige Strinfläche 3 des Kolbens 1 einzubringen und diese Vertiefung zur drehgenauen Positionierung des Kolbens während der Montage zu nutzen. In eine solche nutartige Vertiefung kann ein entsprechendes Montagemittel eingreifen und die positionsgenaue Montage vornehmen, wobei die Kolbenposition insbesondere unter Verwendung optischer Hilfsmittel bzw. Sensoren (z. B. Laser, Bilderkennung, Video etc.) erfaßt sowie gesteuert werden kann.

Nach Figur 1 sind im Kolbeninneren drei auf einem Halbkreis angeordnete Vertiefungen 7 in den Topfboden 2 eingeformt. Die Vertiefungen 7 können dabei aus einfachen kreisrunden Löchern bestehen und bereits während der Herstellung des gesamten Bremskolbens 1 am Topfboden 2 angeformt werden. Die spezielle Anordnung der Vertiefungen 7 im Topfboden 2 gestattet das eindeutige Ansetzen eines entsprechend gestalteten Montagewerkzeuges mit zugehörigen schlüsselartigen Erhebungen, die in die zugehörigen Vertiefungen formschlüssig eingreifen. Hierbei läßt sich das Montagewerkzeug in nur einer einzigen Stellung am Bremskolben 1 ansetzen und verhindert damit die Gefahr einer Fehlmontage. Demnach kann der Bremskolben 1 mit einer definierten Winkelposition, bezogen auf eine Drehung um die Zylinderbohrungsachse 6, in die zugehörige Zylinderbohrung eingesetzt werden.

Weitere Varianten einer schlüsselartigen Aufnahme im Innern eines topfförmigen Bremskolbens 1 sind den Fig. 2 bis 6 zu entnehmen. Hierbei besitzt der Bremskolben 1 nach den Fig. 2 bis 6 als besonders vorteilhafte Weiterentwicklung an seiner dem nicht gezeigten Bremsbelag zugewandten Stirnfläche 3 einen schrägen Abschnitt 8. Die Anordnung einer solchen Schräge 8 an der Stirnfläche 3 hat gegenüber einem Absatz 4 nach Fig. 1 insbesondere spannungsspezifische Vorteile. Die bei einer Anordnung nach Fig. 1 auftretenden Spannungsspitzen im Bereich des Absatzes 4 entfallen bei einer Anordnung gemäß Fig. 2, da ein nahezu kontinuierlicher Übergang zwischen sichelförmiger Anlagefläche 5 und dem schrägen Abschnitt 8 ausgebildet ist. Die Anordnung eines schrägen Abschnittes 8 an der Bremskolbenstirnfläche 3 erweist sich damit insbesondere als vorteilhaft bei Bremskolbenausführungen aus Kunststoff oder aber Aluminium. Die schlüsselartige Werkzeugaufnahme besteht in Fig. 2 in einer halbkreisförmigen Ausnehmung 9 im Topfboden 2.

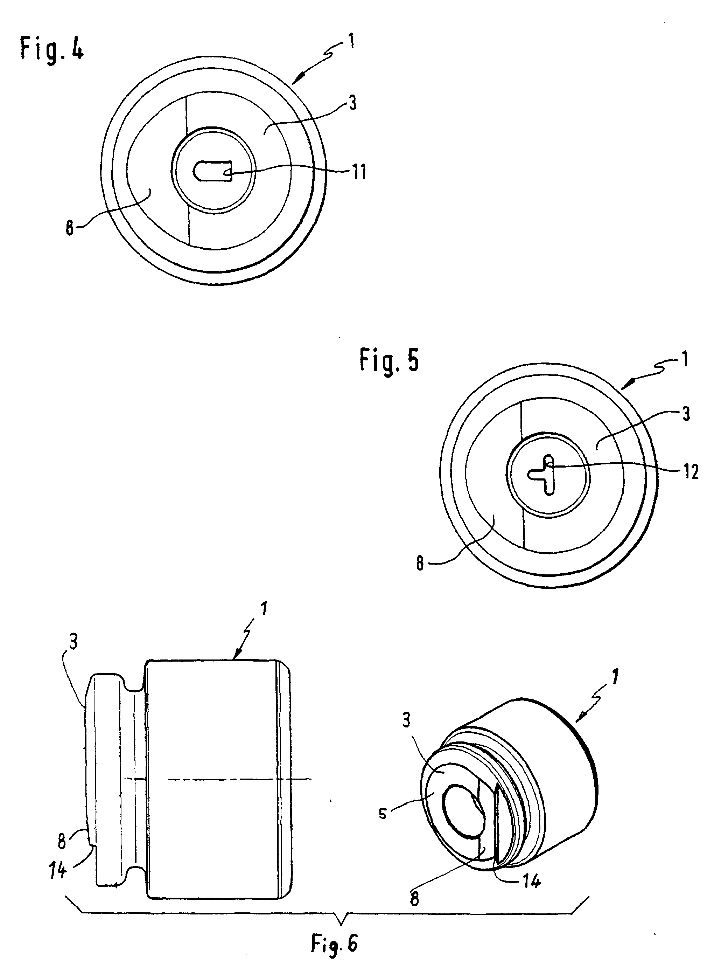

Die weiteren Figuren zeigen zwei Ausführungsvarianten mit einer schlitzartigen Ausnehmung (Fig. 3, Fig. 4) sowie einer T-förmigen Kontur der Ausnehmung (Fig. 5), jeweils innerhalb des Topfbodens 2. Solche schlitz- oder nutartigen Ausnehmungen müssen nicht unbedingt im Innern des topfförmigen Kolbens angeordnet sein sondern können analog dazu selbstverständlich auch an einer anderen Stelle, insbesondere an der dem Bremsbelag zugewandten Stirnfläche 3 vorgesehen sein. Hierbei besitzen die unterschiedlichen Ausführungsvarianten der Werkzeugaufnahme 7,9,10,11,12 eine analoge Funktionsweise und gestatten das eindeutige Ansetzen des Montagewerkzeuges mit entsprechend gestaltetem schlüsselartigen Ansatz in einer definierten Winkelposition. Selbstverständlich ist die Gestaltung der schlüsselartigen Aufnahme am Bremskolben nicht auf die dargestellten Ausführungsvarianten beschränkt und erlaubt eine Übertragung des erfinderischen Prinzipes auf jegliche Kontur einer Werkstückaufnahme, die einen eindeutigen Eingriff eines zugehörigen, passenden Montagemittels zuläßt und damit eine eindeutige Positionierung des Bremskolbens 1 innerhalb der Zylinderbohrung gestattet.

Figur 6 zeigt einen erfindungsgemäßen Bremskolben 1, der an seiner dem nicht gezeigten Bremsbelag zugewandten Stirnfläche 3 mit dem bereits genannten abgeschrägten Flächenab-schnitt 8 versehen ist. Begrenzt wird die Schräge 8 von einem Absatz 14 in Kolbenverschieberichtung, der in einer Sekantenrichtung des zylindrischen Bremskolbens 1 verläuft. Dabei ist die Tiefe des Absatzes 14 in Kolbenverschiebe-richtung derart bemessen, daß sie zum Ansetzen eines zugehörigen Montagehilfsmittels zur drehgenauen Kolbenpositionierung geeignetet ist. Analog zur dargestellten Ausführungsvariante in Fig. 6 kann der Absatz 14 in Sekantenrichtung des Kolbens derart durch den abgeschrägten Flächenabschnitt 8 verlaufen, daß sich beiderseits des Absatzes 14 schräge Teilflächen erstrecken. Ergänzend dazu ist vorgesehen, die Kolbenposition während der Montage mittels optischer Hilfsmittel bzw. Sensoren (z. B. Laser, Bilderkennung, Video etc.) Zu erfassen und zu steuern. Dadurch wird eine automatische Kolbenmontage bei drehgenauer räumlicher Positionierung ermöglicht unabhängig von der Zuführung der einzelnen Bremskolben zur Montagevorrichtung.

Des weiteren ist die Anordnung einer Positionierungsvorrichtung nicht für die Umsetzung an Bremskolben für Scheibenbremsen gebunden, sondern läßt sich vielmehr auf beliebige Kolben einer hydraulischen Kolben-Zylinder-Einheit übertragen, bei denen eine positionsgenaue Montage des Kolbens innerhalb einer Zylinderbohrung erforderlich ist. Entscheidend ist hierbei, daß Montagemittel und zugehörige Aufnahme im Kolben beispielsweise analog zu einer männlich-weiblich-Steckeranordnung formschlüssig ineinandergreifen, wobei es unerheblich ist, ob die Aufnahme 7,9,10,11,12 im Kolben 1 eine männliche oder aber eine weibliche Anordnung aufweist.

## Patentansprüche

1. Kolben (1) für eine hydraulische Kolben-Zylinder-Einheit, insbesondere Bremskolben (1) für eine Scheibenbremse, der topfförmig ausgebildet sowie innerhalb einer Zylinderbohrung verschiebbar angeordnet ist und eine Aufnahme (14) aufweist, zur eindeutigen räumlichen Positionierung des Kolbens (1) innerhalb der Zylinderbohrung mittels eines entsprechend gestalteten Montagemittels, **dadurch gekennzeichnet, daß** zumindest eine Stirnfläche (3) des zylindrischen Kolbens (1) bezogen auf eine senkrecht zur Kolbenverschieberichtung sich erstreckende Ebene einen schrägen Flächenabschnitt (8) aufweist, an dem ein in Sekantenrichtung des zylindrischen Kolbens (1) verlaufender Absatz (14) zum Ansetzen eines zugehörigen Montagemittels ausgebildet ist.

2. Kolben (1) nach Anspruch 1 **dadurch gekennzeichnet, daß** der Absatz (14) den schrägen Flächenabschnitt (8) begrenzt.

3. Kolben (1) für eine hydraulische Kolben-Zylinder-Einheit, insbesondere Bremskolben (1) für eine Scheibenbremse, wobei der Kolben (1) verschiebbar innerhalb einer Zylinderbohrung angeordnet ist und eine schlüsselartige Aufnahme (7, 9, 10, 11, 12) aufweist, zur eindeutigen räumlichen Positionierung des topfförmig ausgebildeten Kolbens (1) innerhalb der Zylinderbohrung mittels eines entsprechend schlüsselartig gestalteten Montagemittels, **dadurch gekennzeichnet, daß** die Aufnahme (7, 9, 10, 11, 12) als zumindest eine Ausnehmung (7, 9, 10, 11, 12) bzw. Erhebung in einen Topfboden (2) eingeformt ist.

4. Kolben (1) nach Anspruch 3, **dadurch gekennzeichnet, daß** Montagemittel und Aufnahme (7, 9, 10, 11, 12) im Kolben (1) analog zu einer männlich-weiblich-Steckeranordnung formschlüssig ausgebildet sind.

## Claims

1. Piston (1) for a hydraulic piston-and-cylinder assembly, in particular brake piston (1) for a disc brake, which has a bowl-type configuration and is slidably arranged within a cylinder bore, and which includes an accommodation (14) for the defined positioning of the piston (1) inside the cylinder bore by way of a mounting means having a mating configuration,
**characterized in that** at least one end surface (3) of the cylindrical piston (1), with respect to a plane that extends vertically to the direction of piston displacement, has an inclined surface portion (8) on which is provided a step (14) that extends in a secant's direction of the cylindrical piston (1) and is intended for application of an associated mounting means.

2. Piston (1) as claimed in claim 1,
**characterized in that** the step (14) defines the inclined surface portion (8).

3. Piston (1) for a hydraulic piston-and-cylinder assembly, in particular brake piston (1) for a disc brake, wherein the piston (1) is slidably arranged within a cylinder bore and includes a key-type accommodation (7, 9, 10, 11, 12) for the defined positioning of the bowl-shaped piston (1) inside the cylinder bore by way of a mounting means which has a mating key-type configuration,
**characterized in that** the accommodation (7, 9, 10, 11, 12) is shaped as at least one recess (7, 9, 10, 11, 12) or projection into a bowl bottom (2).

4. Piston (1) as claimed in claim 3,
**characterized in that** the mounting means and the accommodation (7, 9, 10, 11, 12) in the piston (1) form-lockingly engage each other similar to a male-female plug assembly.

## Revendications

1. Piston (1) pour vérin hydraulique, notamment piston de frein (1) pour frein à disque, qui est réalisé en forme de gobelet, est disposé d'une manière mobile en translation dans un alésage de cylindre et comporte une partie réceptrice (14) servant au positionnement spatial sans équivoque du piston (1) à l'intérieur de l'alésage de cylindre à l'aide d'un moyen de montage de configuration correspondante, **caractérisé en ce qu'**au moins une surface frontale (3) du piston cylindrique (1) comporte, considéré par rapport à un plan s'étendant perpendiculairement à la direction de mouvement de translation du piston, un segment de surface incliné (8) sur lequel est réalisé un décrochement (14) s'étendant suivant une direction sécante vis-à-vis du piston cylindrique (1) et servant à l'appui d'un moyen de montage associé.

2. Piston (1) suivant la revendication 1, **caractérisé en ce que** le décrochement (14) délimite le segment de surface incliné (8).

3. Piston (1) pour vérin hydraulique, notamment piston de frein (1) pour frein à disque, le piston (1) étant disposé mobile en translation dans un alésage de cylindre et comportant une partie réceptrice (7, 9, 10, 11, 12) en forme de clé servant au positionnement spatial sans équivoque du piston (1), réalisé en forme de gobelet, à l'intérieur de l'alésage de cylindre à l'aide d'un moyen de montage à configuration en forme de clé correspondante, **caractérisé en ce que** la partie réceptrice (7, 9, 10, 11, 12) est ménagée au formage dans un fond (2) du gobelet sous forme d'au moins un évidement (7, 9, 10, 11, 12) ou d'une partie en surélévation.

4. Piston (1) suivant la revendication 3, **caractérisé en ce que** le moyen de montage et la partie réceptrice (7, 9, 10, 11, 12) ménagée dans le piston (1) sont réalisés suivant une complémentarité de formes d'une manière analogue à un agencement d'emboîtement mâle-femelle.
